# EUROPÄISCHE PATENTSCHRIFT

(11) **EP 4 175 300 B1**
(45) Veröffentlichungstag und Bekanntmachung des Hinweises auf die Patenterteilung: **21.10.2026**
(21) Anmeldenummer: 22161704.6
(22) Anmeldetag: 11.03.2022
(51) Int. Cl.: H04N 21/234, H04N 21/2665, H04N 21/845

(54) **BEARBEITUNG VON VIDEODATEN**
VIDEO DATA PROCESSING
TRAITEMENT DES DONNÉES VIDÉO

(30) Priorität: 02.11.2021 EP 21206029
(43) Veröffentlichungstag der Anmeldung: 03.05.2023
(73) Patentinhaber: Siemens Healthineers AG, 91301 Forchheim (DE)
(72) Erfinder: HARALD, Karl, 90765 Fürth (DE)
(74) Vertreter: Siemens Healthineers Patent Attorneys

(56) Entgegenhaltungen:
- WO-A1-2021/043706
- US-A1- 2010 296 571
- US-A1- 2013 147 900
- US-A1- 2014 267 395
- US-B2- 11 120 677

## Beschreibung

Die Erfindung betrifft eine integrierte Schaltanordnung, ein Netzwerkgerät und ein Netzwerk sowie eine Rechnereinheit und ein Verfahren zur Bearbeitung von Videodaten.

In der Videotechnik werden zur Übertragung von Videosignalen üblicherweise zumindest die folgenden Schritte durchgeführt. Zunächst werden die Videosignale von einer Quelle, beispielsweise einer Kamera oder einem anderen Aufnahmegerät, eingelesen oder auch mittels Software erzeugt. Anschließend werden die Videosignale in einem weiteren Schritt in eine Senke, z.B. einen Monitor, ein Display oder einen Datenspeicher, ausgegeben. In der Praxis sind jedoch häufig nicht nur Punktzu-Punkt-Verbindungen wünschenswert, bei denen eine Quelle mit einer Senke verbunden wird, sondern in vielen Anwendungsfällen ist es auch erforderlich, dass Videosignale aus einer oder mehreren Quellen auf mehrere Senken verteilt werden. Zwischen dem Einlesen und der Ausgabe der Videosignale werden diese in der Praxis häufig auch noch verarbeitet, also z.B. vergrößert, verkleinert, beschnitten, in eine andere Framerate konvertiert oder dergleichen. Insbesondere werden auch Videosignale aus unterschiedlichen Quellen zusammengeführt bzw. kombiniert.

In der Praxis wird üblicherweise Software verwendet, um aus unterschiedlichen Videosignalen ein kombiniertes Videosignal zu erzeugen. Dazu werden die Videosignale zunächst beispielsweise mit Hilfe von sogenannten Framegrabbern digitalisiert. Die Kombination mittels Software hat den Vorteil, dass Bildbestandteile, wie z. B. Bedienoberflächen, die zwischen einzelnen Frames bzw. Bildern in Position bzw. Anordnung variieren, beim Zusammensetzen der jeweiligen Videosignale flexibel angepasst werden können. Dazu muss das jeweilige Gerät - je nach Anwendung ggf. teure - Hardware aufweisen, auf der die Software ausgeführt wird. Außerdem erhöht sich bei einer solchen Verarbeitung mittels Software, insbesondere bei breitbandigen Videosignalen, ungünstigerweise die Latenz erheblich.

Die Kombination von Videosignalen ist grundlegend auch mittels integrierter Schaltkreise bekannt.

US 2014/267395 A1 offenbart eine interaktive Multiviewer-Schnittstelle und ein Verfahren für Videoübertragungsgeräte mit geringer Latenz.

Dafür muss bisher allerdings mittels einer Konfiguration des Schaltkreises im Vorhinein bekannt sein, wo die einzelnen Videosignale angeordnet werden. Die Latenz ist dabei vorteilhaft gering. Eine Kombination von Bildbestandteilen, die zwischen einzelnen Frames bzw. Bildern in Position bzw. Anordnung variieren, ist bisher auf Basis von integrierten Schaltkreisen jedoch nicht bekannt.

Es ist somit eine Aufgabe der vorliegenden Erfindung, die Kombination von Videosignalen mit Bildbestandteilen, die zwischen einzelnen Frames bzw. Bildern variieren, mit geringer Latenz zu ermöglichen.

Diese Aufgabe wird von einer integrierten Schaltanordnung gemäß Patentanspruch 1, einem Netzwerkgerät, einer Rechnereinheit, einem Netzwerk, durch ein Verfahren zur Bearbeitung von Videodaten sowie durch eine Computerprogrammprodukt gemäß den nebengeordneten Patentansprüchen gelöst.

Die eingangs genannte integrierte Schaltanordnung ist insbesondere als ein integrierter Schaltkreis, z. B. in Form eines FPGA oder ASIC, ausgeführt und dient zur Bearbeitung von Videodaten. Die integrierte Schaltanordnung ist dabei insbesondere so ausgebildet, dass die Videodaten - wenn gewünscht - unkomprimiert empfangen und/oder versendet werden können.

Dazu weist sie eine Anzahl von Videoschnittstellen zum Empfangen und/oder Versenden von den Videodaten aus mehreren Datenströmen auf.

Ferner umfasst die integrierte Schaltanordnung eine Framebuffer-Steuerung und eine Framebuffer-Schnittstelle. Dabei steuert die Framebuffer-Steuerung Zugriffe auf einen Framebuffer mit mehreren Lagen mittels der Framebuffer-Schnittstelle so, dass Videodaten aus mehreren Datenströmen in unterschiedliche Lagen des Framebuffers geschrieben werden. Dabei weisen die Videodaten einer ersten Lage in ersten Bildbereichen, die frameweise variabel sind, einen definierten Farbwert auf.

Aus dem Framebuffer wird ein kombinierter Frame von Videodaten ausgelesen. Dazu werden die ersten Bildbereiche unter Verwendung des definierten Farbwertes ermittelt. In den ersten Bildbereichen wird der kombinierte Frame aus den Videodaten einer zweiten Lage gebildet. Demgegenüber wird der kombinierte Frame in den übrigen Bereichen unter Verwendung der Videodaten der ersten Lage gebildet.

Eine Ausführung der integrierten Schaltanordnung als FPGA ist besonders flexibel, da der FPGA je nach Anwendungsfall noch konfiguriert werden kann. Eine Ausführung der integrierten Schaltanordnung als ASIC ist, insbesondere bei hohen Stückzahlen, kostengünstig herzustellen.

Bei den Videoschnittstellen kann es sich grundsätzlich um beliebige Videoschnittstellen handeln, beispielsweise um digitale Schnittstellen, wie z. B. DP, DVI, HDMI, SDI oder dergleichen, oder um analoge Schnittstellen, wie z. B. VGA-, XGA-, S-Video oder dergleichen. Sie sind bevorzugt dazu ausgebildet, das Videosignal unkomprimiert zu empfangen bzw. zu versenden. Die Anzahl der Videoschnittstellen kann je nach Bedarf konfiguriert werden.

Die Videoschnittstellen können z. B. auch als Netzwerkschnittstellen ausgebildet sein. D. h. die integrierte Schaltanordnung umfasst beispielsweise eine Anzahl von Netzwerkschnittstellen zum Verbinden der integrierten Schaltanordnung mit einer Anzahl von im Wesentlichen gleichen, räumlich getrennten, integrierten Schaltanordnungen zur Übertragung von Daten, welche zumindest Videodaten umfassen.

Mittels der Netzwerkschnittstellen wird die integrierte Schaltanordnung bzw. das Netzwerkgerät, von dem sie umfasst ist, bevorzugt mit weiteren, insbesondere erfindungsgemäßen, integrierten Schaltanordnungen verbunden. Dass diese Schaltanordnungen "im Wesentlichen gleich" sind, bedeutet, dass sie sich gegebenenfalls in der Anzahl und/oder Ausgestaltung ihrer Videoschnittstellen, Netzschnittstellen und/oder Videoverarbeitungseinheiten unterscheiden, ansonsten jedoch gleichartig ausgestaltet sind.

Bevorzugt weist die integrierte Schaltanordnung sowohl eine Anzahl von Videoschnittstellen zum Empfang als auch eine Anzahl von Videoschnittstellen zum Versenden von Videosignalen auf. Der Begriff "Anzahl" bedeutet allgemein im Rahmen dieser Erfindung "ein oder mehrere".

Die Videodaten liegen üblicherweise in Form von Datenströmen (auch Videoströme bzw. Videostreams) vor, in denen eine Bildsequenz der Videodaten bildweise, d. h. frameweise, und in einem Frame bevorzugt zeilenweise, und in den Zeilen besonders bevorzugt pixelweise, d.h. bildpunktweise, seriell übertragen wird.

Bei einem Frame handelt es sich um ein Einzelbild, das - insbesondere mit der der Übertragung zugrundeliegenden Framerate - in dem Framebuffer hinterlegt und aus ihm ausgelesen wird. Eine Sequenz der einzelnen, kombinierten Frames bildet somit ein kombiniertes Videosignal bzw. einen kombinierten Videodatenstrom.

Mittels der Framebuffer-Schnittstelle werden die Videodaten der einzelnen eingehenden Datenströme in den Framebuffer geschrieben. Dazu werden den Datenströmen mittels der Framebuffer-Steuerung jeweils unterschiedliche Bereiche im Framebuffer zugewiesen.

Der Framebuffer ist dazu in eine Mehrzahl von, d.h. zumindest zwei, Lagen bzw. Schichten oder Layers unterteilt. Dabei kennzeichnet eine Lage einen Bereich des Framebuffers, der bevorzugt Videodaten eines vollständigen Frames der auszulesenden Auflösung umfasst. Innerhalb einer Lage kann anhand der Position, an der die Videodaten eines Datenstroms in den Framebuffer geschrieben werden, beispielsweise auch deren Position im auszulesenden Frame bestimmt werden.

Aus dem Framebuffer wird ein kombinierter Frame von Videodaten ausgelesen, der Videodaten aus unterschiedlichen Lagen umfasst. Dazu sind die Lagen in einer Anzeige-Hierarchie bzw. Rangfolge geordnet. Das heißt beispielsweise, dass die erste bzw. oberste Lage bei der Kombination Vorrang gegenüber den weiteren bzw. unteren Lagen hat. Nur in Bereichen, die in den oberen bzw. vorrangigen Lagen durch definierte Farbwerte gekennzeichnet, d.h. deren Pixel mit diesen definierten Farbwerten befüllt sind, werden die Videodaten aus den nachrangigen Lagen bei der Kombination übernommen. Die Kombination der Videodaten der einzelnen Lagen erfolgt also bevorzugt ausschließlich auf Basis der definierten Farbwerte und der Anzeige-Hierarchie der Lagen.

Insbesondere die Videodaten der ersten Lage weisen Bildbereiche auf, die frameweise variabel sind. D. h. beispielsweise, dass sich eine Anzahl, eine Anordnung und/oder eine Größe der ersten Bildbereiche der ersten Lage von Frame zu Frame ändern, die bei der Kombination zum kombinierten Frame nicht übernommen werden. Entsprechend kann sich komplementär dazu eine Anzahl, eine Anordnung und/oder eine Größe der zweiten bzw. der übrigen Bildbereiche der ersten Lage von Frame zu Frame ändern, die bei der Kombination zum kombinierten Frame übernommen werden.

Die frameweise Variabilität der Bildbereiche der ersten Lage wird dabei bevorzugt nicht über eine Änderung der Konfiguration der Framebuffer-Steuerung bewirkt, sondern lediglich durch die Kennzeichnung der ersten Bildbereiche mit dem definierten Farbwert.

Während in den zweiten Bildbereichen also die Videodaten der ersten Lage in dem kombinierten Frame ausgegeben werden, werden die ersten Bildbereiche mit dem definierten Farbwert maskiert, um mit Videodaten der nachrangigen Lagen, wie z. B. der zweiten Lage, überschrieben zu werden.

Der definierte Farbwert bezeichnet einen Farbwert, der je nach dem verwendeten Farbraum bzw. Farbmodell gewählt wird. Es kann sich dabei also beispielsweise um einen festgelegten Grauwert, einen RGB-Wert, Y'CbCr-Wert, oder dergleichen handeln.

Die Framebuffer-Steuerung und die Framebuffer-Schnittstelle ermöglichen es mit anderen Worten also, unterschiedliche eingehende Videosignale bzw. Videodatenströme je nach ihrer durch die Lage im Framebuffer bestimmten Anzeige-Hierarchie und der auf Basis der durch die definierten Farbwerte gekennzeichneten Bildbereiche zu einem gemeinsamen bzw. kombinierten Videosignal zu kombinieren.

Die erfindungsgemäße integrierte Schaltanordnung ermöglicht es somit, die einzelnen Videosignale außerhalb und unabhängig von einer Recheneinheit, z. B. in Form eines PC, zu einem kombinierten Frame zusammenzusetzten. Denn mittels des definierten Farbwerts erfolgt das Zusammensetzen zum kombinierten Frame bevorzugt ohne die Verwendung von Software, sondern lediglich mittels Hardwarekomponenten.

Das eingangs genannte Netzwerkgerät weist eine erfindungsgemäße integrierte Schaltanordnung und physikalische Schnittstellen auf, die mit den entsprechenden Schnittstellen der integrierten Schaltanordnung verbunden sind. Zudem umfasst das Netzwerkgerät einen mehrlagigen Framebuffer, der mit der Framebuffer-Schnittstelle der integrierten Schaltanordnung verbunden ist.

Je nach der Art der weiteren Schnittstellen kann das Netzwerkgerät also mit Videoquellen, Videosenken, weiteren Netzwerkgeräten und bevorzugt unter Verwendung zusätzlicher geeigneter Schnittstellen auch mit Geräten wie z. B. Rechnereinheiten, USB-Geräten, bzw. PCs oder dergleichen verbunden werden.

Die Videoquellen können grundsätzlich beliebige Vorrichtungen sein, die Videosignale ausgeben. Sie können beispielsweise Kameras, medizintechnisch bildgebende Modalitäten, wie z. B. Röntgengeräte, Computertomographen, Magnetresonanztomographen, Ultraschallgeräte oder dergleichen, von Software und/oder Messegeräten, wie z. B. EKG, EEG oder dergleichen, erzeugte Videosignale, Videosignale, die von Datenspeichern abgerufen werden, oder dergleichen umfassen. Insbesondere die Videodaten der ersten Lage werden bevorzugt mittels Software erzeugt, wie später noch detailliert beschrieben wird.

Als Videosenken dienen grundsätzlich beliebige Vorrichtungen, die Videosignale ausgeben. Sie können beispielsweise Monitore, Displays oder andere Anzeigevorrichtungen, Datenspeicher, eine Verbindung zu einem externen Netzwerk oder dergleichen umfassen.

Die eingangs genannte Rechnereinheit ist zur Erzeugung einer ersten Lage von Videodaten zur Übertragung an eine erfindungsgemäße integrierte Schaltanordnung ausgebildet. Dabei weisen die Videodaten der ersten Lage in ersten Bildbereichen, die frameweise variabel sind, einen definierten Farbwert auf. In zweiten Bereichen umfassen die Videodaten der ersten Lage Software-Generierte-Daten, insbesondere UI-Daten.

Die Rechnereinheit generiert also mit Hilfe von Software die Videodaten für die erste Lage des Framebuffers. Diese Videodaten umfassen in den zweiten Bildbereichen, die von den ersten Bildbereichen bevorzugt verschieden sind, insbesondere UI-Daten (User-Interface-Daten), also Videodaten einer Bedienoberfläche bzw. Benutzeroberfläche.

Je nach Interaktion durch einen Benutzer oder durch Software-generierte Ereignisse ändern sich gegebenenfalls die zweiten Bildbereiche, die von den UI-Daten ausgefüllt werden. Eine Vergrößerung bzw. Verkleinerung und/oder Veränderung der Anordnung der ersten Bildbereiche und/oder der zweiten Bildbereiche erfolgt beispielsweise durch ein Öffnen oder Schließen von Pop-Up-Menüs, Drop-Down-Menüs oder dergleichen. Da diese Änderungen der Bedienoberfläche meist wichtige Informationen umfassen werden sie bevorzugt in den zweiten Bildbereichen der ersten Lage des Framebuffers, also mit höchster Priorität, hinterlegt und folgend im kombinierten Frame ausgelesen bzw. angezeigt.

Jedoch sind eben die Videodaten von Benutzeroberflächen und auch die davon belegten zweiten Bildbereiche so variabel, dass sie sich von Frame zu Frame ändern können. Zudem kann die Benutzeroberfläche, z. B. bei einer Vielzahl von ausklappenden Untermenüs, komplexe Formen annehmen. Unter diesen Anforderungen werden insbesondere die mit UI-Daten belegten zweiten Bildbereiche nicht mittels einer Konfiguration der Framebuffer-Steuerung realisiert. Vielmehr werden sie erfindungsgemäß mittels der Maskierung der ersten Bildbereiche mit einem definierten Farbwert freigehalten, indem nur in den ersten Bildbereichen andere Videodaten aus nachrangigen Lagen des Framebuffers angezeigt werden. Die ersten Bildbereiche umfassen also insbesondere Bildbereiche, in denen keine UI-Daten angezeigt werden.

Unter Verwendung der zuvor beschriebenen Komponenten wird das eingangs genannte Netzwerk gebildet, in dem unter anderem bevorzugt hochauflösende Videosignale übertragen werden. Es umfasst eine Anzahl von erfindungsgemäßen Netzwerkgeräten, welche in einer bevorzugt bekannten Netzwerktopologie miteinander verbunden sind. Gegebenenfalls umfasst es, wie oben beschrieben, zusätzlich noch weitere Komponenten. Mit Hilfe eines geeigneten Routings können Videodaten unterschiedlicher Datenströme von den jeweiligen Videoquellen zu einer erfindungsgemäßen Schaltanordnung übertragen werden. Zudem kann ein in einer erfindungsgemäßen Schaltanordnung erzeugter kombinierter Frame bzw. ein Videostream aus solchen kombinierten Frames über das Netzwerk zu den gewünschten Videosenken übertragen und dort ausgegeben werden.

Das eingangs genannte Verfahren zur Bearbeitung von Videodaten umfasst folgende Schritte, welche mittels einer integrierten Schaltanordnung, insbesondere FPGA oder ASIC, ausgeführt werden. In einem ersten Schritt werden Videodaten aus mehreren Datenströmen empfangen. Die Videodaten aus mehreren Datenströmen werden in einem weiteren Schritt in unterschiedliche Lagen des Framebuffers geschrieben. Dabei weisen die Videodaten einer ersten Lage in ersten Bildbereichen, die frameweise variabel sind, einen definierten Farbwert auf.

Weiterhin wird ein kombinierter Frame von Videodaten aus dem Framebuffer ausgelesen. Dazu werden die ersten Bildbereiche unter Verwendung des definierten Farbwertes ermittelt. In den ersten Bildbereichen wird der kombinierte Frame aus den Videodaten einer zweiten Lage gebildet und in den übrigen Bereichen wird der kombinierte Frame unter Verwendung der Videodaten der ersten Lage gebildet.

Ein Großteil der zuvor genannten Komponenten des Netzwerkgeräts, können ganz oder teilweise in Form von integrierten Schaltkreisen bzw. Logikanordnungen realisiert werden.

Grundsätzlich können diese Komponenten aber auch zum Teil, insbesondere wenn es um besonders schnelle Berechnungen geht, in Form von softwareunterstützter Hardware, beispielsweise FPGAs, ASICs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Netzwerkgeräte auf einfache Weise durch teilweise Umrüstung und ein Software-Update bzw. Umkonfigurierung der integrierten Schaltanordnung (FPGAs) nachgerüstet werden können, um auf die erfindungsgemäße Weise zu arbeiten. Insofern wird die Aufgabe auch durch ein entsprechendes Computerprogrammprodukt gelöst, welches in eine programmierbare Logikanordnung eines Netzwerkgeräts konfigurierbar ist, mit Programmabschnitten bzw. logischen Anweisen, um Schritte des erfindungsgemäßen Verfahrens auszuführen, wenn die Logik dem Netzwerkgerät ausgeführt wird. Ein solches Computerprogrammprodukt kann neben dem Computerprogramm gegebenenfalls zusätzliche Bestandteile wie z. B. eine Dokumentation und / oder zusätzliche Komponenten, auch Hardware-Komponenten, wie z. B. Hardware-Schlüssel (Dongles etc.) zur Nutzung der Software, umfassen.

Zum Transport zum Netzwerkgerät und/oder zur Speicherung in dem Netzwerkgerät kann ein computerlesbares Medium, beispielsweise ein Memory-Stick, eine Festplatte oder ein sonstiger transportabler oder fest eingebauter Datenträger dienen, auf welchem die auf der integrierten Schaltanordnung programmierbaren und ausführbaren Programmabschnitte des Computerprogramms gespeichert sind. Die integrierte Schaltanordnung kann z. B. hierzu einen oder mehrere zusammenarbeitende logische Elemente oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die Videodaten der ersten Lage umfassen in zweiten Bildbereichen bevorzugt Software-generierte-Daten, insbesondere UI-Daten, wie oben bereits im Zusammenhang mit der Rechnereinheit beschrieben wurde.

Es ist grundsätzlich möglich, für jedes Pixel einzeln zu prüfen, ob der Farbwert des Pixels dem definierten Farbwert entspricht. Bei einem solchen, pixelweisen Farbwert können jedoch Artefakte entstehen, wenn zufälligerweise eines oder wenige Pixel, z. B. in Bildern oder Grafiken, die eigentlich in den zweiten Bildbereichen angeordnet sind, den definierten Farbwert aufweisen.

Daher weisen die ersten Bildbereiche zeilenweise bevorzugt eine Mehrzahl, d. h. zumindest 2, besonders bevorzugt zumindest 4, ganz besonders bevorzugt zumindest 6 am meisten bevorzugt zumindest 8, aufeinanderfolgende Bildpunkte des definierten Farbwerts auf. Es werden dabei also die Videodaten der zweiten Lage in den kombinierten Frame nur dann übernommen, wenn eine entsprechende Mehrzahl von Pixeln einer Zeile den definierten Farbwert aufweist. Dadurch kann reduziert oder vermieden werden, dass die Videodaten der nachrangigen Lagen unerwünschter Weise an Bildpunkten übernommen werden, die eigentlich zu den zweiten Bildbereichen gehören.

Bevorzugt haben die UI-Daten bzw. die Bedienoberfläche einer Software ein bekanntes bzw., insbesondere bei der Programmierung, festlegbares Farbschema. Es ist also bekannt, welche Farbwerte häufig und welche selten oder gar nicht auftreten. Der Framebuffer umfasst bevorzugt mehr als zwei Lagen. Dabei weist eine jeweils höherrangige Lage erste Bildbereiche mit einem definierten Farbwert auf, in denen der kombinierte Frame aus den Videodaten einer niederrangigen Lage gebildet wird. D. h. die höchstrangige Lage, also die erste bzw. oberste Lage, wird mit höchster Priorität in den kombinierten Frame übernommen und nur in den durch den definierten Farbwert maskierten Bildbereichen werden Videodaten der zweiten Lage übernommen. Die Videodaten der zweiten Lage werden mit nächster Priorität übernommen und nur in den sowohl in der ersten Lage als auch in der zweiten Lage durch den definierten Farbwert maskierten Bildbereichen werden Videodaten der dritten Lage übernommen usw.

Bevorzugt umfassen die Videoschnittstellen Netzwerkschnittstellen, die Videodaten von separaten Netzwerkgeräten empfangen. "Separat" bedeutet dabei räumlich getrennt. Die Geräte sind über die Netzwerkschnittstellen, d. h. über ein zur Videoübertragung geeignetes Netzwerk, miteinander verbunden.

Die Kombination der Videodaten der niederrangigen Lagen - also den Lagen außer der ersten Lage - erfolgt vorzugsweise in den ersten Bildbereichen als Linearkombination. Dies kann z. B. mittels der folgenden Formel erfolgen: $VC \left(x\right) = α ∗ L 3 \left(x\right) + \left(1-α\right) * L 2 \left(x\right)$

Dabei bezeichnet VC(x) einen Farbwert am Bildpunkt x im kombinierten Frame. Dieser setzt sich aus einer linearen Kombination des Farbwerts (bzw. der drei RGB-Werte) am Bildpunkt x der zweiten Lage L2(x) mit dem Farbwert am Bildpunkt x der dritten Lage L3(x) zusammen. Dabei ist α ein Wert zwischen 0 und 1 und gewichtet den der Farbwert dritten Lage L3 gegenüber dem Farbwert der zweiten Lage L2. Mit anderen Worten wird ein Alpha-Blending bzw. eine teiltransparente Überlagerung zwischen den beiden Lagen ausgeführt.

Mittels des Alpha-Blendings in den ersten Bildbereichen wird somit erreicht, dass die entsprechenden Videodaten eine teiltransparente bzw. durchscheinende optische Wirkung erhalten.

Die Framebuffer-Schnittstelle und der Framebuffer sind bevorzugt so ausgebildet, dass Schreibzugriffe und Lesezugriffe gleichzeitig zumindest in unterschiedlichen Bereichen des Framebuffers erfolgen können. Dadurch können die Zugriffe auf den Framebuffer zeiteffizient gesteuert werden.

Sofern der Framebuffer mehr als zwei Lagen umfasst, können alle Lagen genau einen gemeinsamen Farbwert als definierten Farbwert zur Maskierung der ersten Bildbereiche verwenden. Alternativ weist jede Lage bevorzugt einen eigenen definierten Farbwert auf. Dadurch kann vorteilhafterweise für jede Lage ein definierter Farbwert bestimmt werden, der möglichst komplementär zu den Videodaten der zweiten Bildbereiche ist, die in der jeweiligen Lage hinterlegt werden. Die Ermittlung eines entsprechenden Farbwertes wurde oben bereits im Detail beschrieben.

In die unterste Lage bzw. die Lage mit der geringsten Priorität können Bildbereiche, in denen keine Videodaten hinterlegt werden mit einer Hintergrundfarbe oder einer Hintergrundgrafik befüllt werden. Mittels dieser Default-Farbe bzw. Default-Grafik kann ein optisch ansprechenderes Erscheinungsbild im kombinierten Frame erzielt werden.

Die Rechnereinheit generiert die UI-Daten bevorzugt so, dass sie Videodaten eines Mauszeigers umfassen. Das heißt mittels Recheneinheit wird die Position des Mauszeigers ermittelt, die infolge einer Benutzereingabe mittels einer Maus erfasst wird. Der Mauszeiger wird als in den Videodaten der ersten Lage in den Framebuffer geschrieben und entsprechend nicht mit dem definierten Farbwert maskiert, sodass er im kombinierten Frame ausgegeben wird. Für den Mauszeiger können mittels der Software in Abhängigkeit vom Kontext der Anzeige bzw. Position des Mauszeigers unterschiedliche Symbole vorgesehen sein.

Bevorzugt umfassen die Videodaten zumindest hochauflösende Videodaten bzw. Videosignale (gemäß HD-Video-Standard). Darunter werden im Sinne der Erfindung Videodaten verstanden, die zumindest HDTV-übliche Bildauflösung von 1280x720 Pixel bei einer Bildwiederholungsrate bzw. Framerate von 50 fps aufweisen. Bevorzugt beträgt die Auflösung jedoch 1920x1080 Pixel. Selbstverständlich können mittels der integrierten Schaltanordnung auch weiterhin niedriger auflösende Videosignale bearbeitet und übertragen werden.

Besonders bevorzugt umfassen die Videodaten ultrahochauflösende Videodaten (gemäß UHD-Video-Standard). Unter "ultrahochauflösenden Videodaten" sind Videodaten mit einer Auflösung von 4K oder mehr zu verstehen. "4K" bedeutet, dass die Auflösung in der Größenordnung von 4000 Pixeln pro Zeile liegt, also z. B. 3840, 4096 oder dergleichen. Besonders bevorzugt umfassen die Videodaten auch Videodaten mit einer Auflösung von 8K (ca. 8000 Pixel pro Zeile). Dies ist besonders vorteilhaft, um eine Detailgetreue Darstellung auch auf größeren Anzeigemitteln zu erzielen.

Vorzugsweise wird jeweils einem Datenstrom von Videodaten mittels der Framebuffer-Steuerung eine Position im Framebuffer zugewiesen, sodass die Anordnung der Videodaten der jeweiligen Datenströme in einem Frame definiert ist. Die Framebuffer-Steuerung ist dabei - besonders bevorzugt nach Vorgabe eines Benutzers - so konfiguriert, dass sie mittels der jeweiligen Position, an der die Frames der einzelnen ursprünglichen Videosignale jeweils im Framebuffer hinterlegt werden, auch die Position im resultierenden, kombinierten Frame steuert. Die einzelnen Videosignale können somit vorteilhafterweise je nach Bedarf kombiniert werden.

Zusätzlich oder alternativ weist die integrierte Schaltanordnung vorzugsweise eine Fenster-Steuereinheit auf, die bei einem Verschieben der Position eines Datenstroms von Videodaten im Framebuffer, die freiwerdenden Positionen zurücksetzt. Das Verschieben der Position des Datenstroms erfolgt dabei durch eine Änderung der Konfiguration der Framebuffer-Steuerung.

Mittels der Fenster-Steuereinheit wird also vorteilhafterweise sichergestellt, dass nur aktuelle Informationen, in dem kombinierten Videosignal enthalten sind. Dies kann beispielsweise dadurch erfolgen, dass die entsprechenden Positionen auf einen Hintergrundwert gesetzt werden bzw. dadurch, dass ein Alphawert des zuvor hinterlegten Videosignals auf null gesetzt wird.

Bevorzugt umfasst das Netzwerkgerät einen Prozessor mit der integrierten Schaltanordnung verbunden ist. Er konfiguriert unter anderem je nach Bedarf das Routing der Videodaten der einzelnen Datenströme und/oder Parameter für die Bildverarbeitung mittels einer von der integrierten Schaltanordnung umfassten UDP-Einheit.

Der Prozessor verarbeitet z. B. Benutzereingaben und sendet entsprechende UDP-Daten an die UDP-Einheit. Die UDP-Einheit übersetzt die UDP-Daten in ein geeignetes Format für Schreibzugriffe zur Konfiguration von anderen Komponenten des Netzwerkgeräts.

Entsprechende Anweisungen zur Umkonfigurierung des Routings der Videodaten oder der Parameter für die Bildbearbeitung können als UDP-Daten mittels des Netzwerks an andere Netzwerkgeräte bzw. an das jeweilige Ziel-Netzwerkgerät übertragen werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
FIG 1 ein schematisches Blockdiagramm eines Ausführungsbeispiels eines erfindungsgemäßen Netzwerks,
FIG 2 ein schematisches Blockdiagramm eines Ausführungsbeispiels eines erfindungsgemäßen Netzwerkgerätes,
FIG 3 ein schematisches Blockdiagramm eines Ausführungsbeispiels einer erfindungsgemäßen Schaltanordnung,
FIG 4 ein schematisches Blockdiagramm Beispiel eines Framebuffers mit mehreren Lagen und eines ausgelesenen kombinierten Frames und
FIG 5 ein schematisches Ablaufdiagramm eines Ausführungsbeispiels eines erfindungsgemäßen Verfahrens zur Bearbeitung von Videodaten.

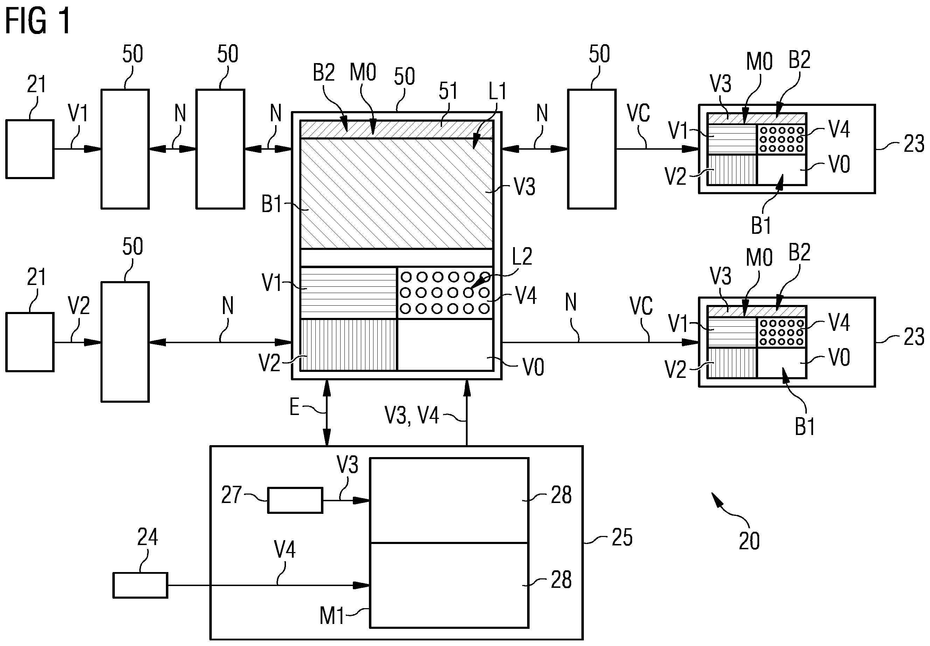

In FIG 1 ist beispielhaft ein erfindungsgemäßes Netzwerk 20 als Blockdiagramm dargestellt. Das Netzwerk 20 umfasst in diesem Ausführungsbeispiel fünf Netzwerkgeräte 50, die im Wesentlichen identisch ausgeführt sind. Es ist jedoch ohne weiteres möglich die Anzahl und die Anordnung der Netzwerkgeräte 50 je nach Bedarf bzw. Anwendungsfall anzupassen. Eines der Netzwerkgeräte ist mit einer Rechnereinheit 25 bzw. einem Computer 25 verbunden. Es wird im Folgenden auch als Proxy-Netzwerkgerät 50 bezeichnet. Mittels der Rechnereinheit 25 können unter anderem Anweisungen zur Konfiguration des Netzwerkes 20 mittels einer Ethernet-Verbindung Ethernet-Daten E an das Netzwerkgerät 50 gesendet werden.

Zwei der Netzwerkgeräte 50 sind mit Videosignalquellen 21 verbunden. Die Videosignalquellen 21 können beispielsweise als Kameras ausgeführt sein, es kann sich dabei aber auch zum Beispiel um Videodaten - im Folgenden auch als Videosignale bezeichnet - handeln, die von Software generiert werden, sie können aus medizintechnisch bildgebenden Modalitäten wie beispielsweise Röntgengeräten stammen oder auch von Messgeräten wie zum Beispiel einem EKG oder einem EEG als Videodaten ausgegeben werden.

Die Videosignalquellen 21 übermitteln ihre Videosignale V1, V2 an die jeweils mit ihnen verbundenen Netzwerkgeräte 50. Das Netzwerkgerät 50, an das die Videodaten V2 gesendet wird ist direkt mit dem Proxy-Netzwerkgerät 50 verbunden. Das Netzwerkgerät 50, an das die Videodaten V1 gesendet wird, ist indirekt über ein weiteres Netzwerkgerät 50 mit dem Proxy-Netzwerkgerät 50 verbunden.

Die Netzwerkgeräte 50 versenden untereinander Netzwerkdaten N. Bei den Netzwerkdaten N handelt es sich um spezielle Datenpakete, welche als Nutzdaten unter anderem die Videodaten V1, V2, V3, V4, Ethernet-Daten E, USB-Daten oder dergleichen umfassen. Neben den Nutzdaten umfassende Netzwerkdaten N Sendungssteuerdaten, welche Adressdaten, Prüfsummen oder dergleichen umfassen.

Die Rechnereinheit 25 ist mit einer medizintechnisch bildgebenden Modalität 24 in Form eines Röntgengeräts 24 verbunden. Das Röntgengerät 24 nimmt Videodaten V4, z. B. vom Inneren eines Patienten, auf und sendet sie an einen Framebuffer 28. In den Framebuffer 28 werden zusätzlich von einer Software generierte Videodaten V3 geschrieben, die in diesem Ausführungsbeispiel Elemente einer Bedienoberfläche, d.h. UI-Daten umfassen. Die UI-Daten sind in zweiten Bildbereichen B2 angeordnet und sollen mit höchster Priorität ausgegeben bzw. angezeigt werden. Erfindungsgemäß generiert die Rechnereinheit 25 die Videodaten V3 daher so, dass die Videodaten V3 lediglich in den ersten Bildbereichen B1 einen definierten Farbwert aufweisen. Der definierte Farbwert kennzeichnet die ersten Bildbereiche, sodass sie bei der Zusammensetzung eines kombinierten Frames VC mit anderen Videodaten V1, V2, V4, V0 überschrieben werden.

Die Videodaten der beiden Videodatenströme V3, V4 werden dabei in zwei unterschiedlichen Frames hinterlegt. Der Framebuffer 28 wird also mit einer jeweils am Videosignal vorliegenden Framerate beschrieben und gegebenenfalls mit einer anderen Framerate ausgelesen, wobei eine Arbitrationslogik etwaige Konflikte zwischen Lese- und Schreibzugriffen verhindern kann.

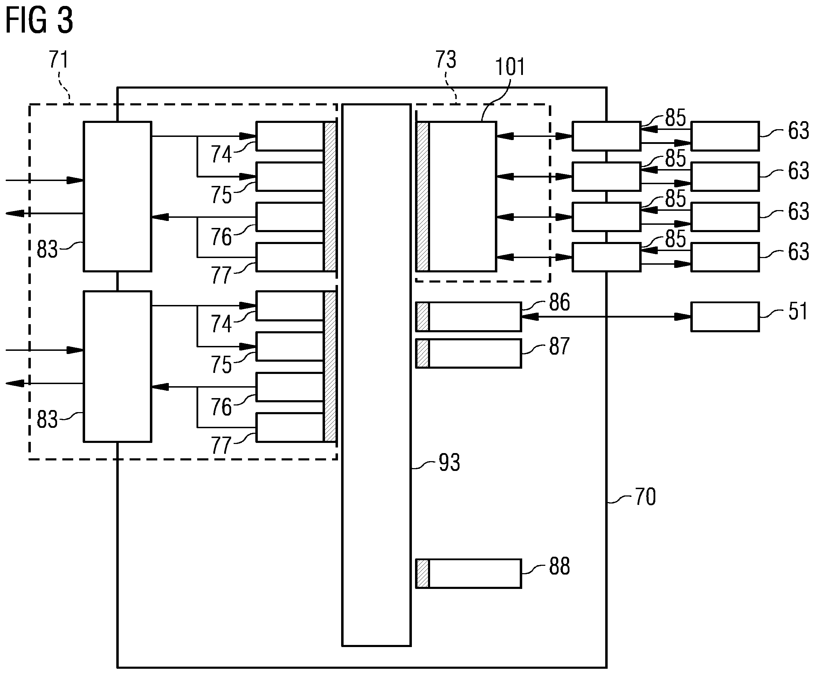

Die Videosignale V3, V4 werden an das Proxy-Netzwerkgerät 50 gesendet. In dem Proxy-Netzwerkgerät 50 wird das Videosignal V3 in eine ersten Lage L1 eines Framebuffers 51 geschrieben, während das Videosignal V4 zusammen mit den Videosignalen V1 und V2 aus den anderen Videosignalquellen 21 in eine zweiten Lage L2 geschrieben wird. Die Information betreffend die Zuweisung der Videosignale V1, V2, V3, V4 zu den einzelnen bestimmungsgemäßen Lagen L1, L2 und der jeweils bestimmungsgemäßen Position innerhalb der jeweiligen Lage, ist in einer Konfiguration der Framebuffer-Steuerung 87 (siehe Fig. 3) hinterlegt.

Die Videodaten V3 der erste Lage L1 weisen einen zweiten Bildbereich B2 auf, der sich als Balken über die gesamte Breite im oberen Bereich der ersten Lage L1 erstreckt. Dabei kann es sich beispielsweise um eine Menüleiste handeln. Auch kann beispielsweise ein Mauszeiger von den Videodaten V3 der ersten Lage L1 bzw. von den UI-Daten umfasst sein. Die übrigen Bereiche der ersten Lage L1 sind mit dem definierten Farbwert als erste Bildbereiche B1 gekennzeichnet. In der zweiten Lage L2 ist der obere Bereich (entsprechend dem zweiten Bildbereich B2 der ersten Lage L1) freigehalten, während die Videosignale V1, V2, V4 darunter als im Wesentlichen gleich dimensionierte Rechtecke angeordnet sind. Die Begriffe "oben", "unten" etc. beziehen sich hierbei auf eine bestimmungsgemäße Anzeige der Videosignale. In dem Bereich V0 ist kein eingehendes Videosignal angeordnet. Daher ein Default-Farbwert oder eine Grafik als Hintergrund eingefügt und ggf. bei der Erzeugung des kombinierten Frames VC verwendet.

Die Videosignale V1, V2, V3, V4, V0 sind grundsätzlich beliebig skalierbar, z. B. mittels der später detaillierter beschriebenen Videobearbeitungseinheiten 90, 91, 92 (siehe Fig. 3), und können mittels der Framebuffer-Steuerung 87 in der jeweiligen Lage L1, L2 des Framebuffers 51, und somit auch im daraus erzeugten kombinierten Frame VC beliebig angeordnet werden.

Der kombinierte Frame VC bzw. das kombinierte Videosignal VC wird zum Versenden in Netzwerkdaten N gepackt und an Netzwerkgeräte 50 übermittelt. Mittels der mit den Netzwerkgeräten 50 verbundenen Videosignalsenken 23 bzw. Ausgabemitteln 23, z. B. in Form von Monitoren, Displays oder dergleichen, wird das kombinierte Videosignal VC ausgegeben. Alternativ oder zusätzlich kann das kombinierte Videosignal VC auch mittels eines direkt mit dem Proxy-Netzwerkgerät 50 verbundenen Ausgabemittels 23 ausgegeben werden.

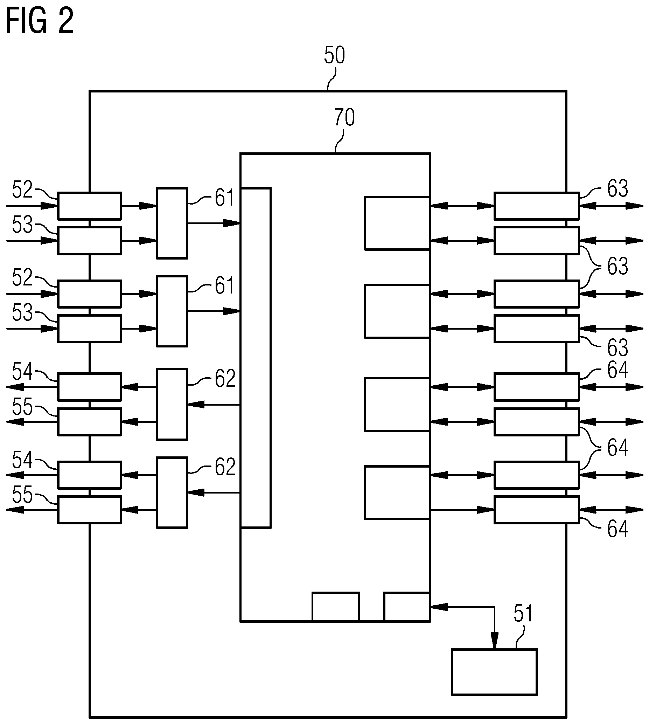

Mittels des erfindungsgemäßen Netzwerks 20 lassen sich somit Videosignale V1, V2, V3, V4 aus unterschiedlichen Videosignalquellen 21, 26, 27 je nach Bedarf erfassen, bearbeiten und/oder zusammenstellen, auf unterschiedlichen Routen durch das Netzwerk übertragen und durch einen Benutzer gewählten Videosenken 23 ausgeben. Die Funktion der Netzwerkgeräte 50 im folgendem Detail anhand von FIG 2 erläutert.

Das Netzwerk 20 ist gemäß seiner bedarfsgemäßen Auslegung ausgestaltet und weist somit eine bekannte Topologie auf. Dadurch lassen sich die Routen zwischen den Netzwerkgeräten 50, den von ihnen umfassten Komponenten und den mit ihnen verbundenen Komponenten ermitteln und in einem Adressierungsschema festhalten. Mittels des Adressierungsschemas kann somit die Route von einem Punkte des Netzwerkes 20 zu einem anderen Punkt des Netzwerkes 20 ermittelt und so die entsprechenden Datenströme je nach Bedarf weitergeleitet werden.

FIG 2 zeigt beispielhaft und schematisch ein erfindungsgemäßes Netzwerkgerät 50 als Blockschaltbild. Das Netzwerkgerät 50 umfasst als zentrale Komponente eine integrierte Schaltanordnung 70, die hier als ein integrierter Schaltkreis 70 insbesondere als ein FPGA, ausgeführt ist. Der integrierte Schaltkreis 70 wird im Detail noch anhand von FIG 3 beschrieben.

Das Netzwerkgerät 50 weist physikalische Steckanschlüsse 52, 53, 54, 55 für Videosignale auf. Zum Empfang von Videosignalen dienen zwei Displayport-Eingänge 52 sowie zwei HDMI-Eingänge 53. Dabei sind jeweils ein Displayport-Eingang 52 und ein HDMI-Eingang 53 mit einem gemeinsamen Multiplexer 61 verbunden, wobei nur einer der beiden Eingänge 52, 53 zur gleichen Zeit genutzt wird. Sowohl HDMI als auch Display-Port weisen je vier Signal-Pins bzw. Lanes auf. Die Lanes des verwendeten Steckanschlusses 52 oder 53 werden mittels des Multiplexers 61 auf eine Signalleitung zusammengelegt und an den integrierten Schaltkreis 70 übertragen.

Umgekehrt gibt der integrierte Schaltkreis 70 ein gemultiplextes Videosignal an einen Demultiplexer 62 aus, der das zusammengelegte Videosignal entsprechend dem Standard des jeweils verbundenen Ausgang 54, 55 auf unterschiedliche Lanes aufgeteilt ausgibt. Zum Versenden der Videosignale sind je zwei Displayport-Ausgänge 54 und HDMI-Ausgänge 55 ausgebildet, wobei jeweils ein Displayport-Ausgang 54 und ein HDMI-Ausgang 55 mit einem gemeinsamen Demultiplexer 62 verbunden sind, aber nur einer der Ausgänge zur gleichen Zeit genutzt wird.

Die Displayport-Anschlüsse unterstützen dabei den sogenannten Display-Port-Multi-Stream (DP-MST), bei dem zumindest zwei Videosignal mittels eines Displayport-Anschlusses übertragen werden können.

Die beschriebene Ausgestaltung der Videosignaleingänge 52, 53 und Videosignalausgänge 54, 55 berücksichtigt, dass am Ort der Installation des Netzwerkes 20 häufig eine Anschlussart vorherrscht. Die Netzwerkgeräte 50 sollen grundsätzlich in einer Bauform auch an unterschiedlichen Orten eingesetzt werden, die ggf. unterschiedliche Anschlussarten benötigen. Andere Video-Steckanschlüsse, wie z. B. VGA, S-Video oder DVI können gegebenenfalls adaptiert werden.

Das Netzwerkgerät 50 weist ferner acht Netzwerkanschlüsse 63, 64 auf. Davon sind vier als SFP-Module 63 ausgestaltet und können je nach Bedarf mit SFP-Transceivern bestückt werden, um Kosten für die vergleichsweise teuren Transceiver zu sparen. Die SFP-Transceivern können je nach zu überbrückender Distanz als Single-Mode-Transceiver oder Multi-Mode-Transceiver ausgebildet sein und können je nach Bedarf z. B. Übertragungsraten von 5 Gbit/s oder 10 Gbit/s aufweisen. Die übrigen vier Netzwerkanschlüsse sind beispielhaft als PCIe-Anschlüsse 64 ausgestaltet, sodass das Netzwerkgerät 50 gegebenenfalls auch als Steckmodul in eine geeignete Vorrichtung, z. b. eine Rechnereinheit oder eine medizintechnisch bildgebende Modalität eingebracht werden kann.

Die Anzahl der Videoanschlüsse 52, 53, 54, 55 und der Netzwerkanschlüsse 63, 64 des Netzwerkgerätes 50 ist im Wesentlichen von der Verarbeitungsleistung des integrierten Schaltkreises 70 abhängig und kann im Übrigen bei der Auslegung des Netzwerkgerätes 50 beliebig gewählt werden.

Das Netzwerkgerät 50 weist außerdem einen Framebuffer 51 in Form eines oder mehrerer DDR-RAM-Module auf, der als MultiLayer-Framebuffer ausgestaltet ist. Die Verwaltung des Framebuffers 51 wird im Detail noch anhand von FIG 3 beschrieben.

FIG 3 zeigt beispielhaft und schematisch einen erfindungsgemäßen integrierten Schaltkreis 70 in Form eines FPGA als Blockdiagramm. Der integrierte Schaltkreis 70 weist ein Videomodul 71sowie ein Netzwerkmodul 73 auf. Die Ausgänge bzw. Eingänge der einzelnen Netzwerkschnittstellen 85 sind mit den als SFP-Transceiver ausgebildeten Netzwerkanschlüssen 63 des Netzwerkgerätes 50 verbunden.

Das Videomodul 71 weist zwei gleich ausgestaltete kombinierte Video-Eingangs-Ausgangs-Schnittstellen 83 auf, die jeweils mit einem Multiplexer 61 und einem Demultiplexer 62 des Netzwerkgeräts 50 verbunden sind. Mittels einer kombinierten Video-Eingangs-Ausgangs-Schnittstellen 83 kann zur gleichen Zeit entweder ein eingehendes oder ein ausgehendes Videosignal in die entsprechende Richtung weitergeleitet werden. Ein eingehendes Videosignal wird je nach dem ihm zugrundeliegenden Standard entweder an eine Displayport-Verbindungsmatrix-Eingangsschnittstelle 74 oder an eine HDMI-Verbindungsmatrix-Eingangsschnittstelle 75 weitergeleitet. Ein ausgehendes Videosignal wird entsprechend dem ihm zugrundeliegenden Standard und an einer anhand der Komponentenadresse des Adressierungsschemas definierten Displayport-Verbindungsmatrix-Ausgangsschnittstelle 76 oder an einer HDMI-Verbindungsmatrix-Ausgangsschnittstelle 77 über die Verbindungsmatrix 93 empfangen und über die damit verbundene kombinierte Video-Eingangs-Ausgangs-Schnittstelle 83 an den entsprechenden Demultiplexer 62 des Netzwerkgeräts 50 weitergeleitet.

Der integrierte Schaltkreis 70 weist ferner eine Framebuffer-Steuerung 87 und eine Framebuffer-Schnittstelle 86 auf. Dabei steuert die Framebuffer-Steuerung 87 Zugriffe auf den Framebuffer 51 des Netzwerkgeräts 50 mittels der Framebuffer-Schnittstelle 86 derart, dass Videodaten V1, V2, V3, V4, V0, aus mehreren Datenströmen in unterschiedliche Lagen L1, L2 des Framebuffers 51 geschrieben werden.

Dazu wird jeweils einem Datenstrom von Videodaten V1, V2, V4, mittels der Framebuffer-Steuerung 87 eine Position in der zweiten Lage L2 des Framebuffers 51 zugewiesen, sodass die Anordnung der Videodaten der jeweiligen Datenströme auch für die Erzeugung des kombinierten Frames VC definiert ist. Die Framebuffer-Steuerung 87 steuert dabei - insbesondere nachdem ihre Konfiguration nach Vorgabe eines Benutzers entsprechend eingerichtet wurde- also mittels der jeweiligen Position, an der die Frames der einzelnen ursprünglichen Videosignale V1, V2, V4 jeweils im Framebuffer 51 hinterlegt werden, auch die Position im resultierenden, kombinierten Videoframe VC.

Zum Auslesen bzw. Erzeugen des kombinierten Frames VC wird zunächst in der ersten Lage L1 ermittelt, an welchen Positionen bzw. Bildpunkten der definierte Farbwert auftritt. Insbesondere wird dabei ermittelt, ob der definierte Farbwert bei einer Mehrzahl, also zumindest zwei, in einer Zeile aufeinanderfolgenden Bildpunkten auftritt. In diesen Bildpunkten, nämlich dem ersten Bildbereich B1, werden für die Erzeugung des kombinierten Frames VC die Videodaten V1, V2, V4, V0 der zweiten Lage L2 verwendet. In den übrigen Bildpunkten, nämlich dem zweiten Bildbereich B2, werden die Videodaten V3 der ersten Lage L1 verwendet. Der auf diese Weise zusammengesetzte kombinierte Frame VC von Videodaten V1, V2, V3, V4, V0 wird aus dem Framebuffer 51 mittels der Framebuffer-Schnittstelle 86 ausgelesen.

Der kombinierte Frame VC umfasst dabei im oberen zweiten Bildbereich B2 Videodaten V3, welche eine Menüleiste M0 als UI-Daten aufweisen. Darunter sind im kombinierten Frame VC im ersten Bildbereich B1 in gleichgroßen Rechtecken die Videosignale V1, V2, V4 angeordnet, die Videodaten aus externen Quellen umfassen. Das verbleibendende Rechteck unten rechts wird beim Auslesen des kombinierten Frames VC mit einer per Default gewählten Hintergrundfarbe bzw. Hintergrundgrafik befüllt, da dort in der zweiten Lage L2 keine Videodaten vorhanden sind.

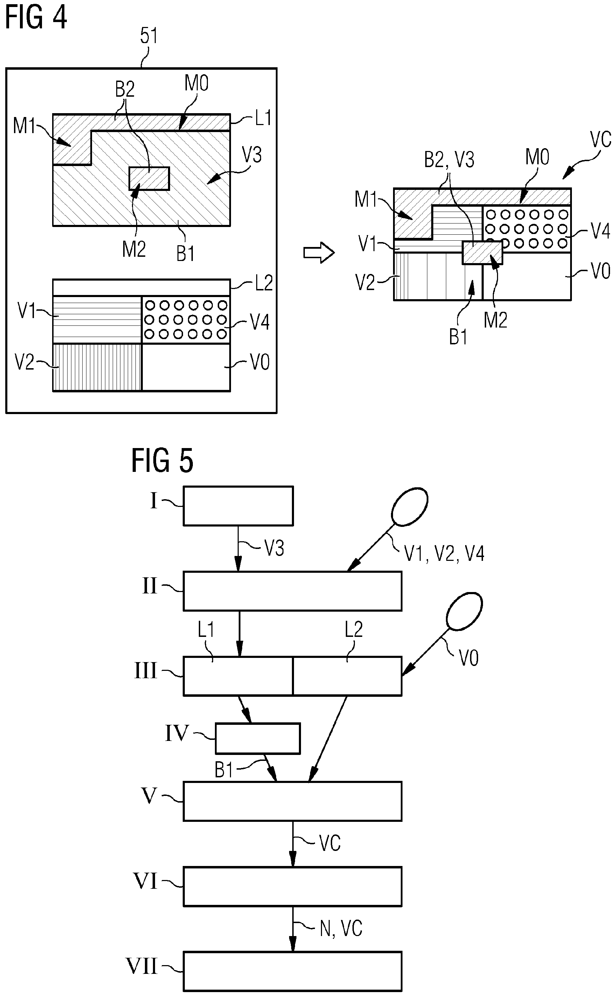

In FIG 4 ist beispielhaft ein Framebuffer 51 eines erfindungsgemäßen Netzwerkgeräts 50 dargestellt, in den ein anderer Satz von eingehenden Videodaten V3' in die erste Lage L1 geschrieben wurde. Die Videodaten V3' umfassen hier neben der Menüleiste M0 (vgl. FIG 1) ein Dropdownmenü M1, welches als Rechteck in der rechten oberen Ecke unter der Menüleiste M0 angeordnet ist. Zudem umfassen die Videodaten V3' ein Popup-Menü M2, welches als Rechteck zentral bzw. vertikal und horizontal mittig in der ersten Lage L1 angeordnet ist.

Die zusätzlichen Menüs M1, M2 werden beispielsweise von den Videodaten V3' umfasst, wenn ein Benutzer mit einem Eingabegerät, wie z. B. einer Maus, Tastatur oder dergleichen, über auslösende Bedienoberflächen fährt, darauf klickt oder dergleichen. Die Menüs können sich dabei frameweise ändern und beliebig komplexe Formen annehmen, sodass es ungünstig wäre, ihre Änderungen in Form und Anordnung mittels der Konfiguration der Framebuffer-Steuerung 87 zu realisieren.

Die Menüs M0, M1, M2 werden von der Software 27 der Rechnereinheit 25 als UI-Daten erkannt, zu den zweiten Bildbereichen B2 zugeordnet und somit nicht mit dem definierten Farbwert maskiert. Die ersten Bildbereiche B1 werden jedoch erfindungsgemäß mit dem definierten Farbwert maskiert.

Aus der ersten Lage L1 und der zweiten Lage L2 wird, wie oben bereits beschrieben, der kombinierte Frame VC' erzeugt. Im Unterschied zu dem kombinierten Frame VC in FIG 1 beinhaltet der kombinierte Frame VC' hier jedoch zusätzlich auch die weiteren Menüs M1, M2. In den entsprechenden Bildbereichen werden somit die Videodaten V1, V2, V4, V0, die aus der zweiten Lage L2 stammen, nicht vollständig in den kombinierten Frame VC' übernommen.

Außerdem weist die integrierte Schaltanordnung 70 eine Fenster-Steuereinheit 88 auf, die bei einem Verschieben der Position eines Datenstroms von Videodaten V1, V2, V4, V0 im Framebuffer 51, die freiwerdenden Positionen zurücksetzt.

Mittels der Fenster-Steuereinheit 88 wird also sichergestellt, dass nur aktuelle Informationen, in dem kombinierten Videosignal enthalten sind. Dies kann beispielsweise dadurch erfolgen, dass die entsprechenden Positionen auf einen Hintergrundwert gesetzt werden bzw. dadurch, dass ein Alphawert des zuvor hinterlegten Videosignals auf null gesetzt wird.

Dies ist möglich, da der Framebuffer 51 als Multi-Layer-Framebuffer 51 ausgestaltet ist. Wenn der Alphawert einer Bildschicht (Layer) auf null gesetzt wird werden die darunterliegenden Schichten sichtbar bzw. angezeigt.

In FIG 5 ist schematisch ein Ablaufdiagramm eines Ausführungsbeispiels eines erfindungsgemäßen Verfahrens zur Bildbearbeitung dargestellt.

In einem vorbereitenden ersten Schritt I werden mittels Software 27 von einer Rechnereinheit 25 Videodaten V3 generiert, welche in zweiten Bildbereichen B2 UI-Daten M0, M1, M2 umfassen. In von den zweiten Bildbereichen B2 verschiedenen, ersten Bildbereichen B1, werden die Videodaten V3 mittels der Software 27 mit einem definierten Farbwert befüllt bzw. maskiert.

In einem zweiten Schritt II werden die Software-generierten Videodaten V3 sowie Videodaten V1, V2, V4 aus anderen Videoquellen mittels der Videoschnittstelle 83 empfangen.

In einem dritten Schritt werden die Software-generierten Videodaten V3 mittels der Framebuffer-Steuerung 87 über die Framebuffer-Schnittstelle 86 in die erste Lage L1 des Framebuffers 51 geschrieben. Zudem werden die weiteren Videodaten V1, V2, V4 über die Framebuffer-Schnittstelle 86 an ihnen mittels der Konfiguration der Framebuffer-Steuerung 87 zugewiesenen Positionen in die zweite Lage L2 des Framebuffers 51 geschrieben. Ferner wird die zweite Lage L2 des Framebuffers 51, sofern sie nicht bereits mit den Videodaten V1, V2, V4 ausgefüllt ist mit einem Default-Farbwert bzw. einer Default-Grafik als Videodaten V0 beschrieben.

In einem vierten Schritt IV wird in der ersten L1 des Framebuffers 51 ermittelt, an welchen Positionen bzw. Bildpunkten der definierte Farbwert auftritt. Insbesondere wird dabei ermittelt, ob der definierte Farbwert bei einer Mehrzahl, also zumindest zwei, in einer Zeile aufeinanderfolgenden Bildpunkten auftritt. Diese Bildpunkte bilden die ersten Bildbereiche B1.

In einem fünften Schritt V werden für die Erzeugung des kombinierten Frames VC in den ersten Bildbereichen B1 die Videodaten V1, V2, V4, V0 der zweiten Lage L2 verwendet. In den übrigen Bildpunkten, nämlich dem zweiten Bildbereich B2, werden die Videodaten V3 der ersten Lage L1 verwendet. Der auf diese Weise zusammengesetzte kombinierte Frame VC von Videodaten V1, V2, V3, V4, V0 wird aus dem Framebuffer 51 mittels der Framebuffer-Schnittstelle 86 ausgelesen.

In einem zusätzlichen sechsten Schritt VI wird der kombinierte Frame VC mittels einer Netzwerkschnittstelle 63 des Netzwerkgeräts 50 in Netzwerkdaten N gepackt und über das Netzwerk 20 versendet.

In einem zusätzlichen siebten Schritt VII werden die Netzwerkdaten N von einem weiteren Netzwerkgerät 50 empfangen. Der kombinierte Frame VC wird entpackt und über ein geeignetes Ausgabegerät 23 angezeigt.

Der kombinierte Frame VC kann alternativ auch direkt über ein geeignetes Ausgabegerät 23 angezeigt werden.

Es wird abschließend noch einmal darauf hingewiesen, dass es sich bei den vorhergehend detailliert beschriebenen Vorrichtungen und Verfahren lediglich um Ausführungsbeispiele handelt, welche vom Fachmann in verschiedenster Weise modifiziert werden können, ohne den Bereich der Erfindung zu verlassen. Beispielsweise lässt sich der Framebuffer unter Verwendung der beschriebenen Funktionsweisen um weitere Lagen erweitern.

Zudem wurde der Framebuffer zuvor lediglich als asynchroner Framebuffer beschrieben. Ebenso ist auch die Verwendung eines synchronen Framebuffer möglich, in dem jede Lage mittels zu beschreibender, auszulesender und zu leerender Bereiche realisiert ist. In der Framebuffer-Steuerung ist dann jeweils ein Pointer für den auszuführenden Zugriff hinterlegt. Ein Frame wird erst dann ausgelesen, wenn er vollständig in den Framebuffer geschrieben wurde. Ein synchroner Framebuffer könnte vorteilhaft sein, um kollidierende Lese- bzw. Schreizugriffe oder dadurch auch Darstellungsartefakte zu vermeiden. Denn es wird immer ein vollständiger und konsistenter Frame ausgelesen.

Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren Komponenten besteht, die - sofern nicht anders beschrieben - gegebenenfalls auch räumlich verteilt sein können. Bei den Netzwerkgeräten handelt es sich jedoch explizit um integrale Einheiten, die alle angegebenen Komponenten in einer konstruktiven Einheit umfassen.

## Patentansprüche

1. Integrierte Schaltanordnung (70), insbesondere FPGA oder ASIC, zur Bearbeitung von Videodaten (V1, V2, V3, V4, V0), aufweisend
- eine Anzahl von Videoschnittstellen (83, 85) zum Empfangen und/oder Versenden von Videodaten (V1, V2, V3, V4, V0) aus mehreren Datenströmen,
- eine Framebuffer-Steuerung (87) und eine Framebuffer-Schnittstelle (86), wobei die Framebuffer-Steuerung (87) Zugriffe auf einen Framebuffer (51) mit mehreren Lagen (L1, L2), mittels der Framebuffer-Schnittstelle (86) so steuert,
- dass Videodaten (V1, V2, V3, V4, V0) aus mehreren Datenströmen in unterschiedliche Lagen (L1, L2) des Framebuffers (51) geschrieben werden, wobei die Videodaten (V3) einer ersten Lage (L1) in ersten Bildbereichen (B1), die frameweise variabel sind, einen definierten Farbwert aufweisen,
- dass die ersten Bildbereiche (B1) als zeilenweise Mehrzahl aufeinanderfolgender Bildpunkte aufweisend den definierten Farbwert ermittelt werden und
- dass ein kombinierter Frame (VC) von Videodaten (V1, V2, V3, V4, V0) aus dem Framebuffer (51) ausgelesen wird, wobei
- in den ersten Bildbereichen (B1) der kombinierte Frame (VC) aus den Videodaten (V1, V2, V4, V0) einer zweiten Lage (L2) gebildet wird und
- der kombinierte Frame (VC) in zweiten Bereichen (B2) unter Verwendung der Videodaten (V3) der ersten Lage (L1) gebildet wird.

2. Integrierte Schaltanordnung nach Anspruch 1, wobei die Videodaten (V3) der ersten Lage in zweiten Bildbereichen (B2) Software-Generierte-Daten, insbesondere Videodaten einer Bedienoberfläche (M0, M1, M2), umfassen.

3. Integrierte Schaltanordnung nach einem der vorstehenden Ansprüche, wobei die ersten Bildbereiche (B1) zumindest 4 zeilenweise aufeinanderfolgende Bildpunkte des definierten Farbwerts aufweisen.

4. Integrierte Schaltanordnung nach einem der vorstehenden Ansprüche, wobei der Framebuffer (51) mehr als zwei Lagen (L1, L2, ...) aufweist und eine jeweils höherrangige Lage (L1) erste Bildbereiche (B1) mit einem definierten Farbwert aufweist, in denen der kombinierte Frame aus den Videodaten (V1, V2, V4, V0) einer niederrangigen Lage gebildet wird.

5. Integrierte Schaltanordnung nach einem der vorstehenden Ansprüche, wobei die Videoschnittstellen (83, 85) Netzwerkschnittstellen (85) umfassen, die Videodaten von separaten Netzwerkgeräten (50) empfangen.

6. Integrierte Schaltanordnung nach Anspruch 4, wobei die Kombination der Videodaten (V1, V2, V4, V0) der niederrangigen Lagen (L2) in den ersten Bildbereichen (B2) als Linearkombination erfolgt.

7. Integrierte Schaltanordnung nach einem der vorstehenden Ansprüche mit einer Fenster-Steuereinheit (89), die bei einem Verschieben der Position eines Datenstroms von Videodaten (V1, V2, V4, V0) im Framebuffer (51), die freiwerdenden Positionen zurücksetzt.

8. Netzwerkgerät (50) mit einer integrierten Schaltanordnung (70) nach einem der vorstehenden Ansprüche und physikalischen Schnittstellen, die mit den entsprechenden Schnittstellen (83, 85) der integrierten Schaltanordnung (70) verbunden sind und einem Framebuffer (51) mit mehreren Lagen (L1, L2), der mit der Framebuffer-Schnittstelle (86) verbunden ist und über die Framebuffer-Steuerung (87) angesteuert wird.

9. Rechnereinheit (25) ausgebildet zur Erzeugung einer ersten Lage (L1) von Videodaten (V3) zur Übertragung an eine integrierte Schaltanordnung (70) nach einem der Ansprüche 1 bis 7, wobei die Videodaten (V3) der ersten Lage (L1) in ersten Bildbereichen (B1), die frameweise variabel sind, einen definierten Farbwert aufweisen und in zweiten Bereichen (B2) Software-Generierte-Daten, insbesondere Videodaten einer Bedienoberfläche (M0, M1, M2), umfassen.

10. Rechnereinheit nach Anspruch 9, wobei die Videodaten einer Bedienoberfläche Videodaten eines Mauszeigers umfassen.

11. Netzwerk (20) mit einer Anzahl von Netzwerkgeräten (50) nach Anspruch 8 und bevorzugt zumindest einer Rechnereinheit (25) nach Anspruch 9 oder 10.

12. Verfahren zur Bearbeitung von Videodaten (V1, V2, V3, V4, V0) mittels einer integrierten Schaltanordnung (70), insbesondere FPGA oder ASIC, umfassend folgende Schritte:
- Empfangen (II) von Videodaten (V1, V2, V3, V4) aus mehreren Datenströmen,
- Schreiben (III) von Videodaten (V1, V2, V3, V4) aus mehreren Datenströmen in unterschiedliche Lagen (L1, L2) des Framebuffers (50), wobei die Videodaten (V3) einer ersten Lage (L1) in ersten Bildbereichen (B1), die frameweise variabel sind, einen definierten Farbwert aufweisen,
- Ermitteln (IV) der ersten Bildbereiche (B1) als zeilenweise Mehrzahl aufeinanderfolgender Bildpunkte aufweisend den definierten Farbwert,
- Auslesen (V) eines kombinierten Frames (VC) von Videodaten (V1, V2, V3, V4, V0) aus dem Framebuffer (51), wobei
- in den ersten Bildbereichen (B1) der kombinierte Frame (VC) aus den Videodaten (V1, V2, V4, V0) einer zweiten Lage (L2) gebildet wird und
- der kombinierte Frame (VC) in den übrigen Bereichen (B2) unter Verwendung der Videodaten (V3) der ersten Lage (L1) gebildet wird.

13. Computerprogrammprodukt mit einem Computerprogramm, welches direkt in eine integrierte Schaltanordnung (70) ladbar ist, mit Programmabschnitten, um alle Schritte des Verfahrens nach Anspruch 12 auszuführen, wenn die integrierte Schaltanordnung (70) mittels des Computerprogramms konfiguriert ist.

## Claims

1. Integrated circuit arrangement (70), in particular an FPGA or an ASIC, for processing video data (V1, V2, V3, V4, V0), having
- a number of video interfaces (83, 85) for receiving and/or emitting video data (V1, V2, V3, V4, V0) from a plurality of data streams,
- a frame buffer control system (87) and a frame buffer interface (86), wherein the frame buffer control system (87) controls access events to a frame buffer (51) with a plurality of layers (L1, L2), by means of the frame buffer interface (86) in such a way
- that video data (V1, V2, V3, V4, V0) from a plurality of data streams is written into different layers (L1, L2) of the frame buffer (51), wherein the video data (V3) of a first layer (L1) has a defined colour value in first image regions (B1) that are variable frame by frame,
- that the first image regions (B1) are established as, line by line, a plurality of sequential image points having the defined colour value, and
- that a combined frame (VC) of video data (V1, V2, V3, V4, V0) is read out from the frame buffer (51), wherein
- in the first image regions (B1), the combined frame (VC) is formed from the video data (V1, V2, V4, V0) of a second layer (L2), and
- in second regions (B2), the combined frame (VC) is formed using the video data (V3) of the first layer (L1).

2. Integrated circuit arrangement according to claim 1, wherein the video data (V3) of the first layer comprises software-generated data in second image regions (B2), in particular video data of a user interface (M0, M1, M2).

3. Integrated circuit arrangement according to one of the preceding claims, wherein the first image regions (B1) have, line by line, at least 4 sequential image points of the defined colour value.

4. Integrated circuit arrangement according to one of the preceding claims, wherein the frame buffer (51) has more than two layers (L1, L2, ...) and, in each case, a higher-order layer (L1) of first image regions (B1) with a defined colour value in which the combined frame is formed from the video data (V1, V2, V4, V0) of a lower-order layer.

5. Integrated circuit arrangement according to one of the preceding claims, wherein the video interfaces (83, 85) comprise network interfaces (85) which receive video data from separate network devices (50).

6. Integrated circuit arrangement according to claim 4, wherein the combination of the video data (V1, V2, V4, V0) of the lower-order layers (L2) takes place in the second image regions (B2) as a linear combination.

7. Integrated circuit arrangement according to one of the preceding claims, having a window control unit (89) which, on a displacement of the position of a data stream of video data (V1, V2, V4, V0) in the frame buffer (51), resets the positions that become free.

8. Network device (50) with an integrated circuit arrangement (70) according to one of the preceding claims, and physical interfaces which are connected to the corresponding interfaces (83, 85) of the integrated circuit arrangement (70) and to a frame buffer (51) with a plurality of layers (L1, L2) which is connected to the frame buffer interface (86) and is controlled via the frame buffer control system (87).

9. Computer unit (25) configured for generating a first layer (L1) of video data (V3) for transferring to an integrated circuit arrangement (70) according to one of the claims 1 to 7, wherein the video data (V3) of the first layer (L1) comprises, in first image regions (B1) that are variable frame by frame, a defined colour value and, in second image regions (B2), software-generated data, in particular video data of a user interface (M0, M1, M2).

10. Computer unit according to claim 9, wherein the video data of a user interface comprises video data of a mouse pointer.

11. Network (20) having a number of network devices (50) according to claim 8 and preferably at least one computer unit (25) according to claim 9 or 10.

12. Method for processing video data (V1, V2, V3, V4, V0) by means of an integrated circuit (70), in particular an FPGA or an ASIC, comprising the following steps:
- receiving (II) video data (V1, V2, V3, V4) from a plurality of data streams,
- writing (III) video data (V1, V2, V3, V4) from a plurality of data streams into different layers (L1, L2) of the frame buffer (50), wherein the video data (V3) of a first layer (L1) has a defined colour value in first image regions (B1) that are variable frame by frame,
- establishing (IV) the first image regions (B1) as, line by line, a plurality of sequential image points having the defined colour value,
- reading out (V) a combined frame (VC) of video data (V1, V2, V3, V4, V0) from the frame buffer (51), wherein
- in the first image regions (B1), the combined frame (VC) is formed from the video data (V1, V2, V4, V0) of a second layer (L2), and
- in the remaining regions (B2), the combined frame (VC) is formed using the video data (V3) of the first layer (L1).

13. Computer program product having a computer program which can be directly loaded into an integrated circuit arrangement (70), having program portions in order to carry out all the steps of the method according to claim 12 when the integrated circuit arrangement (70) is configured by means of the computer program.

## Revendications

1. Agencement (70) de circuit intégré, en particulier FPGA ou ASIC, pour le traitement de données (V1, V2, V3, V4, V0) vidéo, comportant
- un certain nombre d'interfaces (83, 85) vidéo pour la réception et/ou l'envoi de données (V1, V2, V3, V4, V0) vidéo composées de plusieurs flux de données,
- une commande (87) de tampon de trame et une interface (86) de tampon de trame, dans lequel la commande (87) de tampon de trame a des accès à un tampon (51) de trame ayant plusieurs couches (L1, L2), au moyen duquel l'interface (86) de tampon de trame est commandée,
- de manière à ce que des données (V1, V2, V3, V4, V0) vidéo composées de plusieurs flux de données soient écrites dans des couches (L1, L2) différentes du tampon (51) de trame, dans lequel les données (V3) vidéo d'une première couche (L1) ont une valeur de couleur définie dans des premières zones (B1) d'image, qui sont variables en fonction de la trame, et
- en ce que les premières zones (B1) d'image sont établies en tant que plusieurs points images se succédant ligne par ligne comportant la valeur de couleur définie et
- en ce qu'on lit dans le tampon (51) de trame une trame (VC) combinée de données (V1, V2, V3, V4, V0) vidéo, dans lequel
- dans les premières zones (B1) d'image, on forme la trame (VC) combinée composée des données (V1, V2, V4, V0) vidéo d'une deuxième couche (L2), et
- on forme la trame (VC) combinée dans des deuxièmes zones (B2) en utilisant les données (V3) vidéo de la première couche (L1).

2. Agencement de circuit intégré suivant la revendication 1, dans lequel les données (V3) vidéo de la première couche comprennent dans des deuxièmes zones (B2) d'image des données créées par logiciel, en particulier des données vidéo d'une surface (M0, M1, M2) de commande.

3. Agencement de circuit intégré suivant l'une des revendications précédentes, dans lequel les premières zones (B1) d'image ont au moins 4 points images de valeur de couleur définie se succédant ligne par ligne.

4. Agencement de circuit intégré suivant l'une des revendications précédentes, dans lequel le tampon (51) de trame a plus que deux couches (L1, L2, ...) et une trame (L1) respective de rang plus haut a des premières zones (B1) d'image d'une valeur de couleur définie, dans lesquelles on forme la trame combinée composée des données (V1, V2, V4, V0) vidéo d'une couche de rang plus bas.

5. Agencement de circuit intégré suivant l'une des revendications précédentes, dans lequel les interfaces (83, 85) vidéo comprennent des interfaces (85) de réseau, qui reçoivent des données vidéo d'appareils (50) de réseau distincts.

6. Agencement de circuit intégré suivant la revendication 4, dans lequel la combinaison des données (V1, V2, V4, V0) vidéo des couches (L2) de rang le plus bas a lieu dans les premières zones (B2) d'image sous la forme d'une combinaison linéaire.

7. Agencement de circuit intégré suivant l'une des revendications précédentes, comprenant une unité (89) de commande de fenêtre, qui, lors d'un décalage de la position d'un flux de . données de données (V1, V2, V4, V0) vidéo dans le tampon (51) de trame, ramène aux positions devenant inoccupées.

8. Appareil (50) de réseau, comprenant un agencement (70) de circuit intégré suivant l'une des revendications précédentes et des interfaces physiques, qui sont reliées à des interfaces (83, 85) correspondantes de l'agencement (70) de circuit intégré, et un tampon (51) de trame ayant plusieurs couches (L1, L2), qui est relié à l'interface (86) de tampon de trame et qui est commandé par la commande (87) de tampon de trame.

9. Unité (25) informatique constituée pour la production d'une première couche (L1) de données (V3) vidéo pour la transmission à un agencement (70) de circuit intégré suivant l'une des revendications 1 à 7, dans lequel les données (V3) vidéo de la première couche (L1) ont, dans des premières zones (B1) d'image, qui sont variables trame par trame, une valeur de couleur définie et dans des deuxièmes zones (B2), comprennent des données créées par logiciel, en particulier des données vidéo d'une surface (M0, M1, M2) de commande.

10. Unité informatique suivant la revendication 9, dans laquelle les données vidéo d'une surface de commande comprennent des données vidéo d'un indicateur à souris.

11. Réseau (20) comprenant un certain nombre d'appareils (50) de réseau suivant la revendication 8 et, de préférence, au moins une unité (25) informatique suivant la revendication 9 ou 10.

12. Procédé de traitement de données (V1, V2, V3, V4, V0) vidéo, au moyen d'un agencement (70) de circuit intégré, en particulier d'un FPGA ou d'un ASIC, comprenant les stades suivants :
- réception (II) de données (V1, V2, V3, V4) vidéo composées de plusieurs flux de données,
- écriture (III) de données (V1, V2, V3, V4) vidéo composées de plusieurs flux de données dans des couches (L1, L2) différentes du tampon (50) de trame, dans lequel les données (V3) vidéo d'une première couche (L1) dans des premières zones (B1) d'image, qui sont variables trame par trame, ont une valeur de couleur définie,
- détermination (IV) des premières zones (B1) d'image comme pluralité ligne par ligne de points image successifs comportant la valeur de couleur définie,
- lecture (V) d'une trame (VC) combinée de données (V1, V2, V3, V4, V0) vidéo dans la mémoire (51) tampon, dans lequel
- dans les premières zones (B1) d'image, on forme la trame (VC) combinée composée des données (V1, V2, V4, V0) vidéo d'une deuxième couche (L2), et
- on forme la trame (VC) combinée dans des deuxièmes zones (B2) en utilisant les données (V3) vidéo de la première couche (L1).

13. Produit de programme d'ordinateur comprenant un programme d'ordinateur, qui peut être chargé directement dans un agencement (70) de circuit intégré, comprenant des parties de programme pour exécuter tous les stades du procédé suivant la revendication 12, lorsque l'agencement (70) de circuit intégré est configuré au moyen du programme d'ordinateur. .
